# EUROPEAN PATENT APPLICATION

(11) **EP 4 715 496 A1**
(43) Date of publication of application: **25.03.2026**
(21) Application number: 25000098.1
(22) Date of filing: 09.09.2025
(51) Int. Cl.: G05B 17/02, G06F 9/455, G05B 9/02

(54) **FEATURES SIMULATOR FOR EMBEDDED DEVICE OF A SAFETY LASER SCANNER**

(30) Priority: 09.09.2024 US 202463692636 P; 03.09.2025 US 202519318285
(71) Applicant: Datalogic IP Tech S.r.l., 40012 Lippo di Calderara di Reno (BO) (IT)
(72) Inventor: Cilli, Simone, 40012 Lippo di Calderara di Reno (IT); Montemurro, Emanuele, 40012 Lippo di Calderara di Reno (IT); Morra, Marisa, 40012 Lippo di Calderara di Reno (IT); Bagalà, Fabio, 40012 Lippo di Calderara di Reno (IT)
(74) Representative: Schohe, Stefan

(57) **Abstract**

The disclosure includes a safety laser scanner device having a features simulator embedded thereon. One or more processors having one or more embedded software applications may be operable to connect with an external controller during an operational mode, and to emulate behavior of the external controller during a test mode that is configured to test the SLS device and validate configuration settings without the use of an external controller. A related method includes operating a safety laser scanner to communicate input process images and output process images between a programmable logic controller (PLC) and the safety laser scanner during an operational mode, communicate input process images and output process images between an external computer running a graphical user interface (GUI) during a test mode, and operate embedded logic within the safety laser scanner operable to emulate behavior of the PLC during test mode without a connection to the PLC.

## Description

### PRIOR APPLICATION

This application claims the benefit of U.S. Provisional Application No. 63/692,636, filed September 9, 2024, and entitled "Features Simulator for Embedded Device of a Safety Laser Scanner," the disclosure of which is incorporated by reference herein in its entirety.

### TECHNICAL FIELD

The present disclosure relates generally to scanners or code readers, and more particularly, to safety laser scanners.

### BACKGROUND

Safety laser scanners (SLS) are complex devices that typically require expert users in order to be correctly configured. A user interface may be utilized to configure and monitor the device; however, testing the device is a complex topic that requires a deep knowledge of the device. The introduction of fieldbus channel highly increases this complexity such as by introducing requirements of fieldbuses device (e.g., programmable logic controllers (PLC) and related tools).

Fieldbus protocols form the backbone of industrial communication systems, allowing for effective interaction between various devices in automated processes. From the early and simple Modbus protocol, which became a widespread standard due to its simplicity and ease of use, to the high-performance and high-speed Profibus designed for complex communication tasks, the diversity of these systems is vast. Such fieldbus protocols like PROFINET (and its safety version PROFIsafe), EtherCAT (and its safety version FSoE), EtherNet/IP (and its safety version CIP Safety) are increasingly used and are becoming a standard de facto for certain SLS products. These protocols allow devices to be easily and safely integrated into industrial networks.

The use of fieldbus protocol facilitates simple and safe system integration allowing connection of devices with third party safety devices, such as safety programmable logic controllers (PLC), robot controllers, remote I/O modules, etc. When connected to a modular controller, the system provides scalability, facilitating the integration of other devices, and mainly high-capacity transmission of both "safe" and "non-safe" data across all levels of communication.

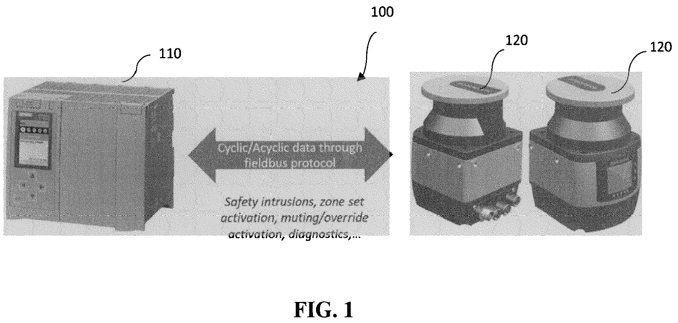

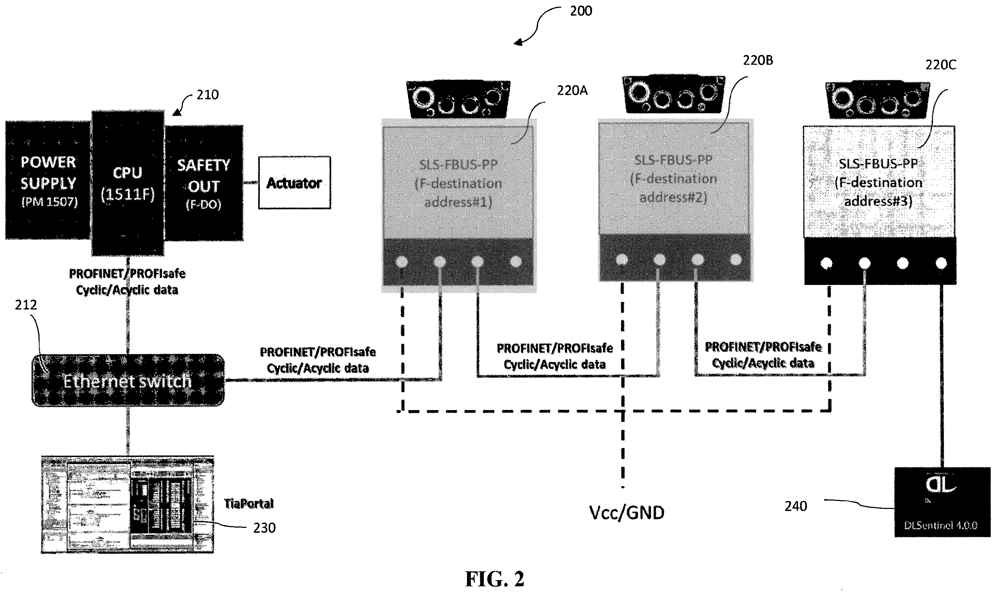

FIG. 1 is a safety laser scanner system 100 including a controller 110 operably coupled with one or more SLS devices 120. The controller 110 and the SLS devices 120 may exchange both safety cyclic and acyclic data through the fieldbus protocol. FIG. 2 is a more detailed network topology of a safety laser scanner system 200 in which cyclic/acyclic data is exchanged through the fieldbus protocol between a safety PLC 210, ethernet switch 212, and one or more SLS devices 220A-220C. In this example, three SLS devices 220A-220C with PROFINET/PROFIsafe protocols are connected in daisy chain to the safety PLC 210 through the ethernet switch 212. The PLC 210 may be controlled though the software application TIA Portal 230 installed on a standard PC. The last SLS device 220C of the chain may be connected to a PC to be handled via the Graphical User Interface (GUI) 240. The other SLS devices 220A, 220B of the chain can be connected to the GUI also, but here, for sake of simplicity, only the last one is shown in FIG. 2.

To start operating the network, the user usually performs approximately the following steps to setup the system:
Step 1. Configure each single SLS through an online portal (e.g., GUI 240) for drawing safety zones to be monitored, enable/disable functions (e.g., override, muting, manual/automatic restart, etc..).
Step 2. Connect all the cables among SLS devices 220A-220C and the PLC 210.
Step 3. PLC programming: design network configuration and PLC settings though the TIA Portal 230 and download to PLC 210.
Step 4. Start commissioning: activate/deactivate functions, monitor the status of the intrusions of the safety zones monitored by each single SLS device in a safety way, through the cyclic data process image on the fieldbus protocols, monitor the diagnostics through the acyclic and cyclic data on the fieldbus protocol, etc.

According to the above steps, the user starts to see how the system works only after developing the PLC program which is usually performed by an expert operator. The SLS itself, without connection to the PLC 210 with its own program, cannot usually be used since safety outputs, functions, and so on, cannot be activated by wires but only with a safety fieldbus communication. The inventors have appreciated that this approach is not advantageous for unexpert operators, or beginning customers that start to use the device and industrial fieldbus protocol. Currently, it is possible to define the configuration of an SLS scanner using a GUI that allows the user to define safety and warning areas to be monitored and to set other parameters such as override, muting, etc., however, other limitations are addressed by this disclosure as described below.

### BRIEF SUMMARY

A safety laser scanner device is disclosed comprising one or more processors having one or more embedded software applications operable to connect with an external controller during an operational mode, and to emulate behavior of the external controller during a test mode that is configured to test the SLS device and validate configuration settings without the use of an external controller.

A method for operating a safety laser scanner comprises communicating input process images and output process images between a programmable logic controller (PLC) and the safety laser scanner during an operational mode, communicating input process images and output process images between an external computer running a graphical user interface (GUI) during a test mode, and operating embedded logic within the safety laser scanner operable to emulate behavior of the PLC during test mode without a connection to the PLC.

### BRIEF DESCRIPTION OF THE DRAWINGS

FIG. 1 is a safety laser scanner system including a controller operably coupled with one or more SLS devices.
FIG. 2 is a more detailed network topology of a safety laser scanner system.
FIG. 3 shows a process flow between a GUI and an SLS fieldbus according to an embodiment of the disclosure.
FIG. 4A is a table showing a schema of an input process image and meaning of each bit according to an embodiment of the disclosure.
FIG. 4B is a table showing a schema of an output process image and meaning of each bit according to an embodiment of the disclosure.
FIGS. 5 and 6 are GUIs showing functionality of a features simulator according to an embodiment of the disclosure.
FIGS. 7A and 7B show an example of the GUI changing the value of a byte to activate a specific safety zone set.
FIG. 8 shows an example of the GUI activating a tooltip may be activated when the user hovers over it.
FIG. 9 shows an example of a portion of the GUI demonstrating assigning a specific color being to the bits that represent a specific function.
FIG. 10 shows a simplified software block diagram showing embedded software modules for the SLS device according to embodiments of the disclosure.
FIG. 11 shows a flowchart showing a method for SLS simulator activation according to embodiments of the disclosure.

### DETAILED DESCRIPTION

The illustrations included herewith are not meant to be actual views of any particular systems, memory device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting) or other operative arrangement of at least one structure and at least one apparatus facilitating the operation thereof in a defined way (e.g., to carry out a specific function or set of functions).

As used herein, the phrases "coupled to" or "coupled with" refer to structures operably connected with each other, such as connected through a direct connection or through an indirect connection (e.g., via another structure or component).

Embodiments of the disclosure may include a mechanism to easily test a SLS device or other device and validate user configuration without the use of external equipment (e.g., programmable logic controller (PLC)). Although the description and related exemplary embodiments may be directed primarily toward safety laser scanners (SLS), embodiments of the disclosure may also include other devices that may implement such features described herein (e.g., fieldbus protocol), such as safety light barriers, machine vision products, high-end sensors, etc. Embodiments may include an embedded solution on the device that communicates with a graphical tool that may increase the ease of use for the customers and other users.

Although conventional graphical interfaces for such SLS devices offer many features, present systems do not enable the user to test the SLS device's configuration in the various possible scenarios described herein, such as muting activation or set zone switching. Conventional approaches are typically only for monitoring the data exchanged through the fieldbus protocol, which means that the SLS device must be connected to the PLC and the fieldbus communication must be running. No interactions are permitted to activate functions of the SLS device under convention systems.

Embodiments of the disclosure may overcome the static simulator issue described above and to provide assistance for the user to check the correctness of the configuration before installing the SLS device and connecting to a PLC. In order to be able to test the desired configuration in a more complete way, before sending configuration settings to the SLS device or in the absence of a PLC, new features in the GUI may enable the user to interact with new features embedded in the SLS device to verify the configuration. This may enable the user to have immediate feedback on the configuration set and activate all the features, as desired. In addition, the capabilities of the scanner may be demonstrated in an easy and effective way.

Embodiments of the disclosure provide embedded logic (e.g., simulator fieldbus interface) on the SLS device to emulate the behavior of the PLC to use the SLS device before installing it within the complex industrial system. Using the PROFIsafe protocol implemented on Fieldbus devices, which is based on the cyclical exchange of data between host and device, a test mode may be activated, through the use of the GUI, which allows the user to simulate the various scenarios and verify their configuration. This enables the user to verify their configuration and reduce the number of interactions to achieve the desired configuration.

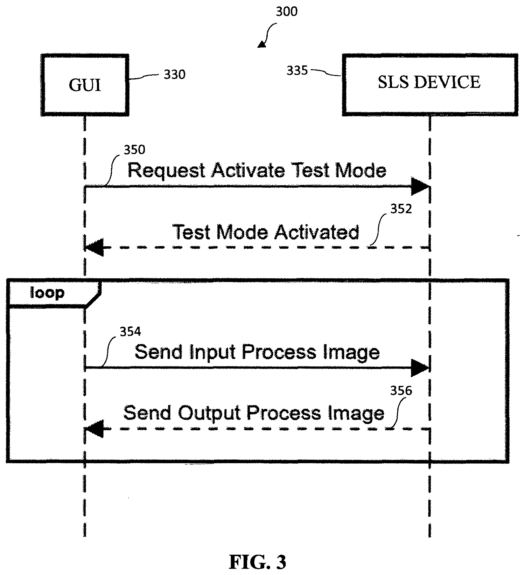

FIG. 3 shows a process flow between a GUI 330 and an SLS device 335 within a safety laser scanner system 300 according to embodiments of the disclosure. These operations may be operated by one or more processors executing software stored in computer-readable media within the SLS device 335 or other device executing the GUI 330. The GUI 330 may be executed on an external computer (e.g., desktop, laptop, etc.) in communication with one or more SLS devices via fieldbus communication protocols. As previously mentioned, the GUI 330 may be configured to communicate with a logic module (e.g., simulator fieldbus interface) that is embedded on the SLS device 335 (e.g., in memory operably coupled with the controller of the SLS device) that is part of the network. The GUI 300 may be configured to operate the SLS device 335 in a test mode that emulates the behavior of a PLC that will later be connected during an operational mode for the system 300. During the test mode, the GUI 300 may enable the user to monitor the cyclic data sent by the SLS device 335 and to monitor the data sent to the SLS device 335 as if the GUI 300 were a fieldbus controller (e.g., PLC). Simulated functions during the test mode may include one or more of a wink, zone set activation, restarting a safety zone, muting activation for the safety zone, or overriding activation of the safety zone.

At operation 350, the user may use the GUI 330 to send a request to the one or more SLS devices 335 that are part of the SLS fieldbus to activate the test mode. During test mode, the GUI 330 may communicate with the embedded simulator fieldbus interface module on the SLS device 335 to send/receive simulated process images. Once the test mode is activated (operation 352), the GUI 330 sends an input process image to the SLS device 335 over the SLS fieldbus (operation 354), and the embedded application(s) on the SLS device 335 may generate an output process image to the GUI 330. The GUI 330 and the SLS device 335 continues to exchange input/output process images (operation 356). Input and output process images will be described further below. During this test mode, the user may use the GUI 330 to modify the bytes of the input process image to activate the various features and test the configuration. The cyclic frequency and the number of cycles could be configured by the user in one field of the request.

In some embodiments, the GUI 300 may also be configured to perform a monitoring function during its operational mode in order to verify the proper functioning of a created configuration by monitoring the current working area. Monitoring may include verifying operational information, such as the status of a safety zone, connector pin assignments, proper detection of an object within the defined safety or warning zones, diagnostic errors, surrounding space detected by the device in real-time, proper switching of zone sets, and other selected parameters.

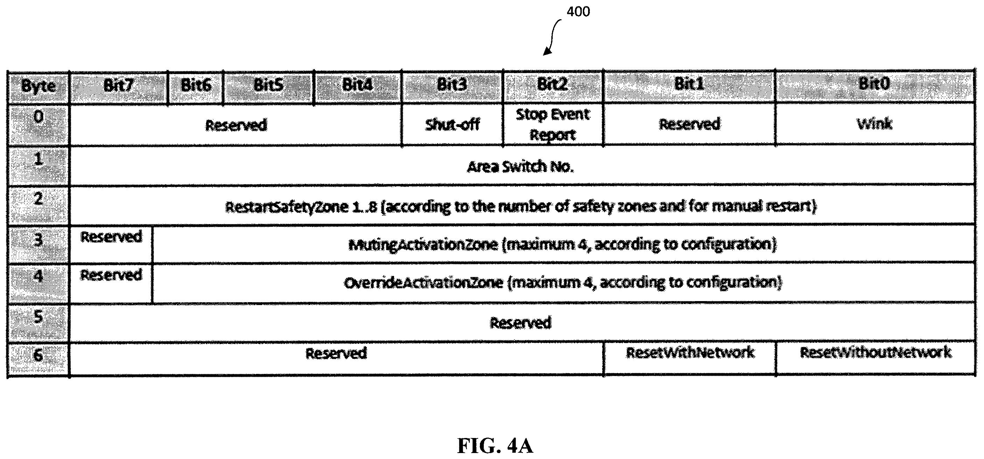

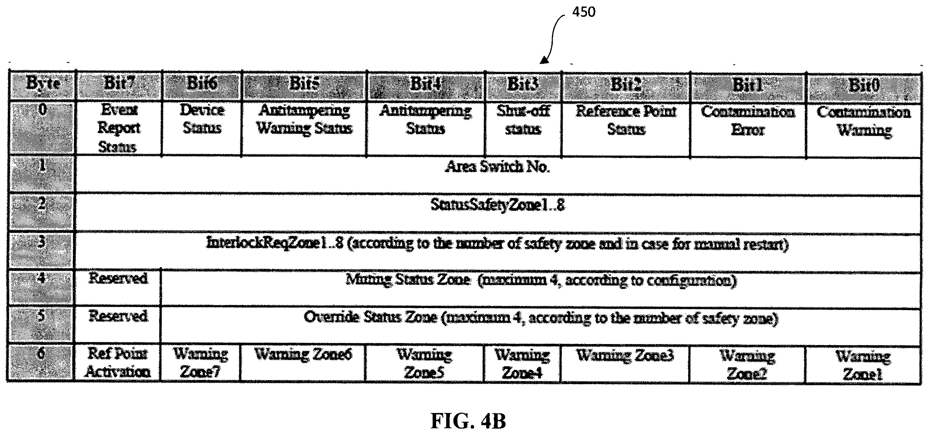

As an example, the tables 400, 450 shown in FIG. 4A, 4B illustrate a schema of a 7-byte I/O process image and the meaning of each bit. In particular, FIG. 4A shows a table 400 providing an example of an input process image with the meaning of each bit thereof that can be used to test the configuration of the SLS device. FIG. 4B shows a table 450 providing an example of an output process image with the meaning of each bit thereof that may be generated by the SLS device during the test mode. Although 7-byte process images are shown in these examples, other schema is also contemplated such as 12-byte or others as desired.

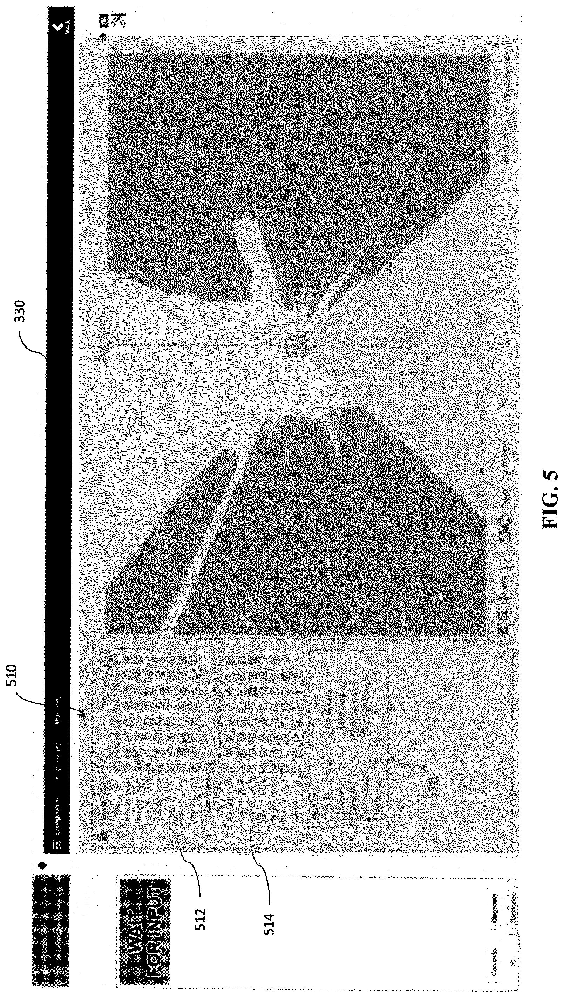

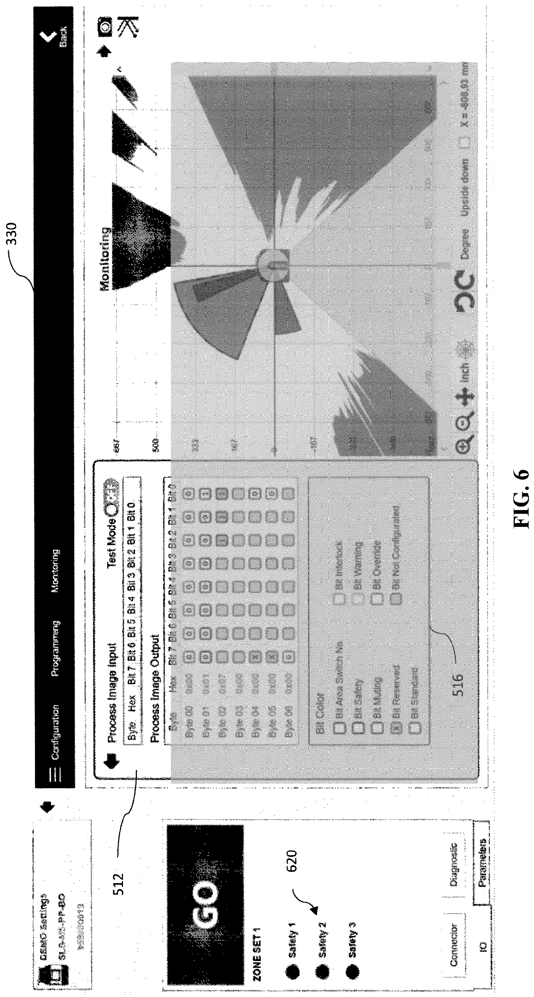

By entering a test mode, the value of each bit (e.g., via the input process image) may be changed to verify the configuration that has been created and to verify that the SLS device is working correctly (e.g., via the output process image). This functionality is incorporated into the GUI 330 that is displayed for the user to interact with as shown in FIGS. 5 and 6.

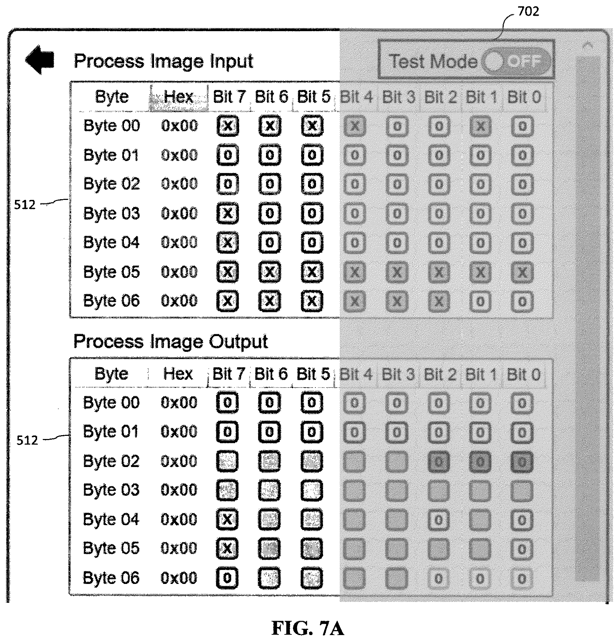

FIGS. 5 and 6 are GUIs 330 showing functionality of a features simulator according to an embodiment of the disclosure. On the left side of the GUI 330, a configuration area 510 is provided that includes a process image input area 512, a process image output area 514, and a legend 516. FIGS. 7A, 7B, 8, and 9 show these areas with more clarity.

The process image input area 512 presents a bitmap of the process image input according to the defined configuration. This bitmap may include individual input bytes that are editable (in hexadecimal format or other similar format such as decimal, binary, etc.) by the user to simulate the controller data sent to the SLS device during test mode.

The process image output area 514 presents a bitmap of the process image output generated by the SLS device according to the defined configuration and in response to the process image input.

The legend 516 presents a color legend of the bitmaps to help the user understand the meaning of the different bits shown. To facilitate the interpretation of the process images, the user may also move the cursor to the interested bit and a tooltip may appear showing the meaning of the selected bit.

The GUI 330 also shows current status of the SLS device. FIG. 5 shows a process image in monitoring view, and FIG. 6 shows a test mode enabled view. A configuration may also be created that does not use the input process image. More in general, the user interface may be adapted to configuration and device model to show the right editing fields.

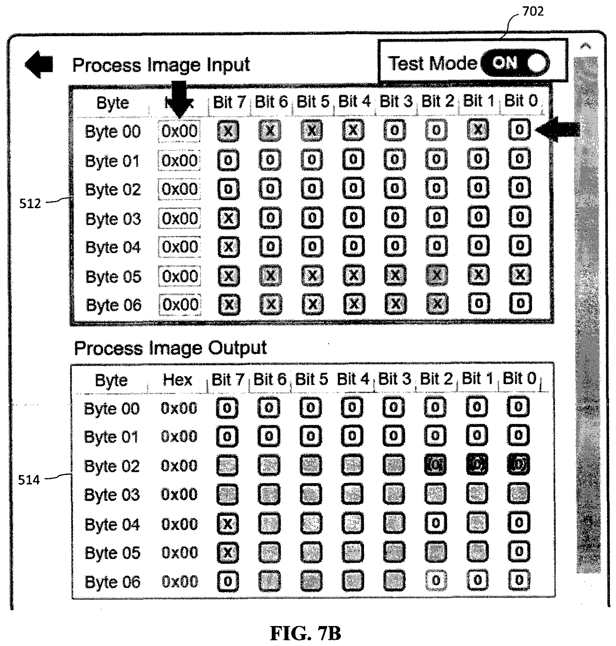

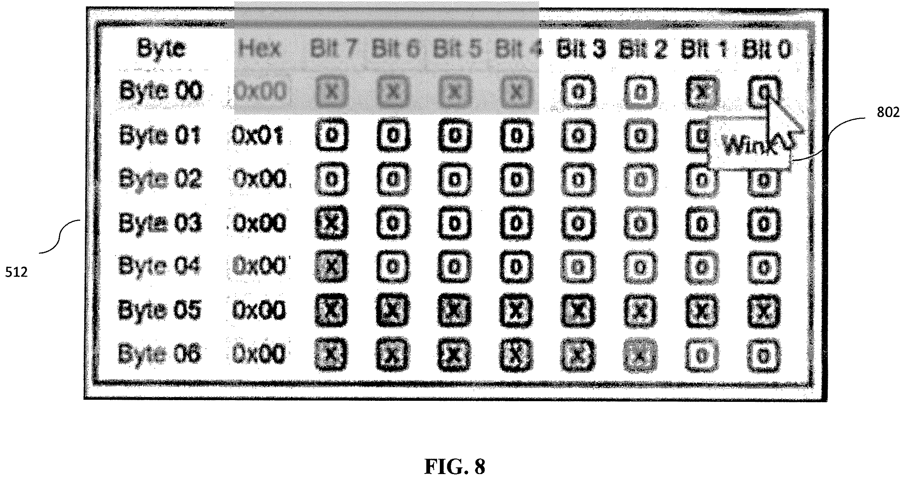

By activating the test mode, using the "Test Mode" button 702 (as shown in FIGS. 7A and 7B), the modification of the individual bytes of the input process image (HEX text box) and of the individual bits (by clicking on the single bit) may be enabled. These are the implemented editing modes. Many alternatives are contemplated to edit these fields depending on the meaning of the bits or of the group of bits. FIGS. 7A and 7B shows an example of changing the value of a byte to activate a specific safety zone set. To make the meaning of each bit clearer, a tooltip 802 may be activated when the user hovers over the bit (e.g., via mouse pointer), as shown in FIG. 8.

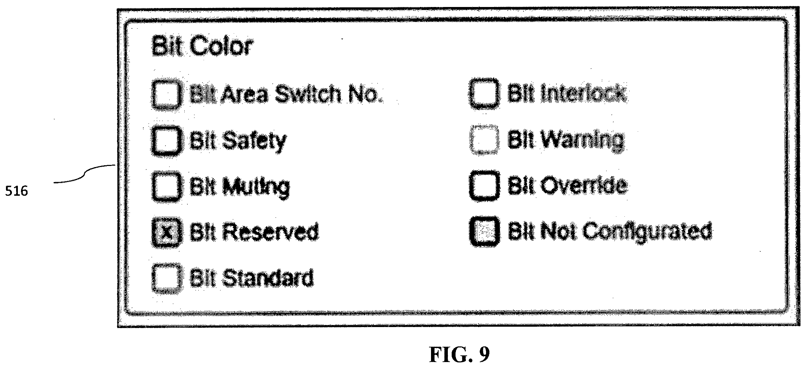

To facilitate the tests, the user will be able to define a "test procedure." For example, the user may be able to define a test procedure to switch between the various set zones based on the defined configuration. To make the bit values clearer, a specific color may be assigned to the bits that represent a specific function, and to highlight the bits that cannot be used because they are reserved or because they are not available for the current configuration as shown in the legend 516 of FIG. 9.

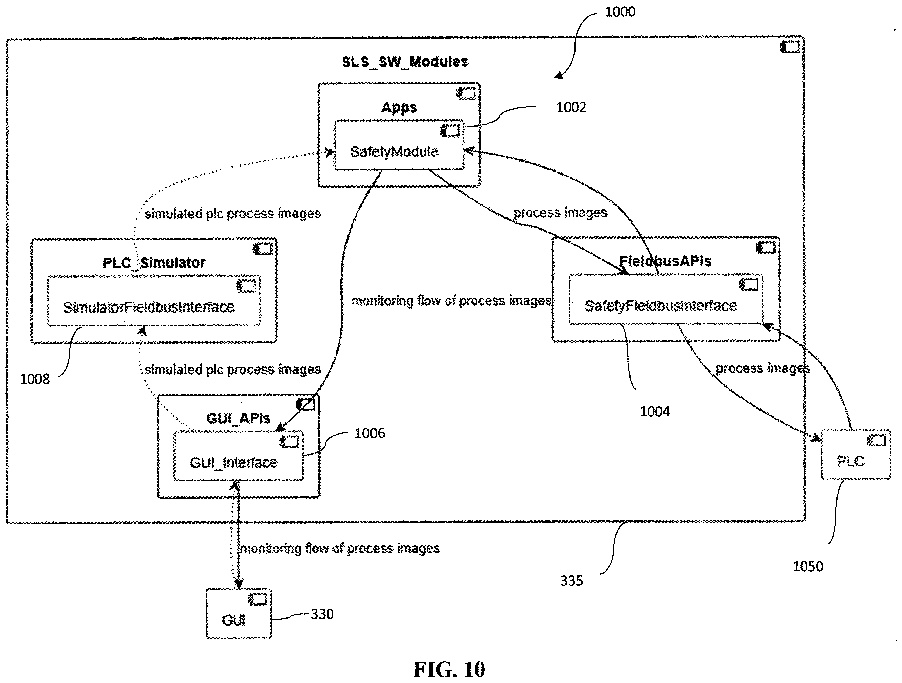

FIG. 10 shows a simplified software block diagram 1000 showing embedded software modules for the SLS device 335 according to embodiments of the disclosure. A main software module (*SafetyModule* 1002) may be configured to compute the acquired measurements for every scan round to detect intrusions in the configured safety areas. Based on diagnostic status and intrusions, *SafetyModule* 1002 generates the output process image (see FIG. 4A for details) and sends it to a *SafetyFieldbusInterface* module 1004 which configured to take charge the communication with an external PLC 1050 during operational mode. At the same time, *SafetyModule* 1002 reads the input process image arriving from PLC through *SafetyFieldbusInterface* 1004 and eventually enables/disables functionalities (e.g., muting, override, restart and zone set switching). The communication between *SafetyModule* 1002 and *SafetyFieldbusInterface* 1004 cyclically occurs, and it is asynchronous compared to the communication between *SafetyFieldbusInterface* and the PLC 1050 (they could have also a different cycle time).

The process images (input and output) may be sent also to the GUI 330 through a *GUI Interface* module 1006 (in a TCP/IP format or other formats) if the monitoring functionality is enabled. In this way, the user may see what SLS device 335 continuously sends and receives to/from the PLC 1050. A point of this implementation is that most of the logic is still used also in test mode to replicate the real logic used through the PLC 1050. The only skipped parts are the communication channel including PROFINET/PROFISAFE stack.

As described above, the SLS device 335 may only be a node of a more complex system with different heterogenous nodes where the PLC 1050 is the master. For this reason, the SLS device 335 could not work without PLC 1050 because it expects the selection of a zone set configuration (byte 1 in FIG. 4 of the input process image) to start the detection. To overcome this constraint, in the SLS device 335 embedded architecture an object may be implemented which can emulate the PLC 1050. This embedded module is shown in FIG. 10 as the *SimulatorFieldbusInterface* module 1008. This object may be disabled until an explicit GUI command is sent to activate test mode.

In test mode, the SLS device 335 may not expect the connection with the PLC 1050. As test mode is enabled, *SafetyModule* 1002 stops the communication with *SafetyFieldbusInterface* 1004 and starts the sampling of the "simulated" process images coming from *SimulatorFieldbusInterface* 1004. These simulated process images are periodically sent and updated by GUI 330. With such a mechanism, the user through this simulator tool of GUI 330 could send any process image and could test all the SLS functionalities without PLC connection.

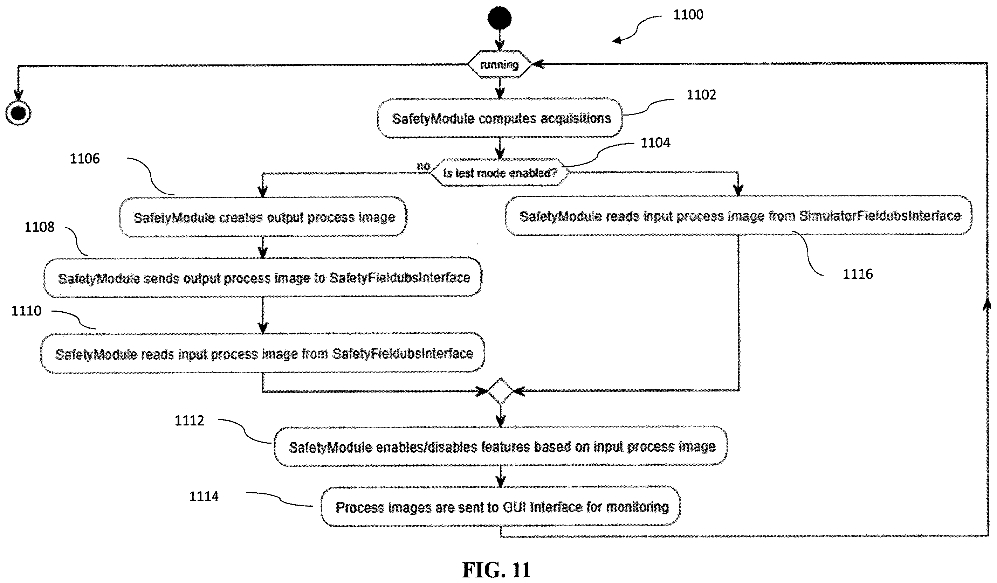

SLS fieldbus logic is described in FIG. 11, which is a flowchart 1100 showing a method for SLS simulator activation, including the *SafetyModule* computing acquisitions (operation 1102) before determining whether the test mode is enabled (operation 1104). If test mode is not enabled, the SLS device may operate in its operational mode with the PLC. During such operational mode, the *SafetyModule* may create output process image (operation 1106) that are then sent to the *SafetyFieldbusInterface* (operation 1108). The *SafetyModule* may also read an input process image from the *SafetyFieldbusInterface* (operation 1110). The *SafetyModule* may then enable and/or disable features based on the input process image (operation 1112), from which output process images can be sent to the GUI interface for monitoring (operation 1114).

If the test mode is enabled, the *SafetyModule* reads an input process image from the *SimulatorFieldbusInterface* (operation 1116), which operates the PLC simulator tool that tests all the SLS functionalities without a PLC connection. The *SafetyModule* may then enable and/or disable features based on the simulated input process images (operation 1112), from which simulated output process images can be sent to the GUI interface for monitoring (operation 1114).

Additional non-limiting embodiments include:
Embodiment 1. A safety laser scanner device, comprising: one or more processors having one or more embedded software applications operable to connect with an external controller during an operational mode, and to emulate behavior of the external controller during a test mode that is configured to test the SLS device and validate configuration settings without the use of an external controller.
Embodiment 2. The safety laser scanner device of Embodiment 1, wherein the external controller is a PLC device.
Embodiment 3. The safety laser scanner of Embodiment 1 or Embodiment 2, wherein configuration settings include at least one of muting activation, zone set activation, winking, restarting a safety zone, or overriding an activation of a safety zone for the safety laser scanner.
Embodiment 4. The safety laser scanner device of any of Embodiments 1 through 3, wherein the embedded software application communicates with a graphical user interface executed by an external PC coupled with the safety laser scanner.
Embodiment 5. The safety laser scanner of Embodiment 4, wherein the graphical user interface includes a configuration area provided therein that includes a process image input area that is editable by the user to provide an input process image to the safety laser scanner.
Embodiment 6. The safety laser scanner of Embodiment 5, wherein the configuration area of the graphical user interface includes a process image output area configured to display an output process image received from the safety laser scanner.
Embodiment 7. The safety laser scanner of Embodiment 5 or Embodiment 6, wherein the configuration area of the graphical user interface includes a color legend of the bitmaps to help the user understand the meaning of the different bits shown.
Embodiment 8. The safety laser scanner of any of Embodiments 4 through 7, wherein the graphical user interface includes a test input configured to switch the safety laser scanner between operating in the operational mode and the test mode.
Embodiment 9. The safety laser scanner of any of Embodiments 5 through 8, wherein the process image input area presents a bitmap of the input process image with individual input bytes that are editable by the user in hexadecimal format or other format such as decimal, binary, etc.
Embodiment 10. The safety laser scanner of any of Embodiments 1 through 9, wherein the one or more embedded software applications includes: a safety module configured to compute acquired measurements to detect intrusions to a configured safety area for the safety laser scanner and generate an output process image in response thereto; a safety fieldbus interface module configured to communicate input and output process images with the external controller during operational mode; and a simulator fieldbus interface module configured to communicate input and output process images with the graphical user interface during a test mode.
Embodiment 11. The safety laser scanner of any of Embodiments 1 through 10, wherein the simulator fieldbus interface module is disabled until an explicit GUI command is sent to activate the test mode.
Embodiment 12. The safety laser scanner of Embodiment 10 or Embodiment 11, wherein the safety module communicates with the safety fieldbus interface module only during operational mode, and with the simulator fieldbus interface only during test mode.
Embodiment 13. A method for operating a safety laser scanner, comprising: communicating input process images and output process images between a programmable logic controller (PLC) and the safety laser scanner during an operational mode; communicating input process images and output process images between the safety laser scanner and an external computer running a graphical user interface (GUI) during a test mode; and operating embedded logic within the safety laser scanner operable to emulate behavior of the PLC during test mode without a connection to the PLC.
Embodiment 14. The method of Embodiment 13, wherein emulated behaviors of the PLC include one or more of a wink, zone set activation, restarting a safety zone, muting activation for the safety zone, or overriding activation of the safety zone.
Embodiment 15. The method of Embodiment 13 or Embodiment 14, further comprising transmitting a test mode activation request from the GUI to the safety laser scanner.
Embodiment 16. The method of any of Embodiments 13 through 15, further comprising transmitting input process images from the GUI to the safety laser scanner during the test mode, and transmitting output process images from the safety laser scanner to the GUI during the test mode.
Embodiment 17. The method of Embodiment 16, further comprising editing the input process images in response to a user input to the GUI during test mode.
Embodiment 18. The method of Embodiment 17, wherein editing the input process images includes editing an individual bit in a graphical representation of the input process image displayed by the GUI.
Embodiment 19. The method of any of Embodiments 16 through 18, wherein input process images and output process images are graphically represented by the GUI as a bitmap.
Embodiment 20. The method of any of Embodiments 13 through 19, wherein operating embedded logic within the safety laser scanner includes operating a simulator fieldbus interface module that is disabled until an explicit GUI command is sent to activate the test mode.

The foregoing method descriptions and/or any process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be communicated (e.g., passed, forwarded, and/or transmitted) via any suitable means including memory sharing, message passing, token passing, network transmission, etc.

The actual software code or specialized control hardware used to implement these systems and methods is not limiting of the disclosure. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in one or more processor-executable software modules which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of various preferred embodiments for implementing the disclosure, and the scope of the invention should not necessarily be limited by this description. The scope of the present invention is instead defined by the claims.

## Claims

1. A safety laser scanner device, comprising:
one or more processors having one or more embedded software applications operable to connect with an external controller during an operational mode, and to emulate behavior of the external controller during a test mode that is configured to test the safety laser scanner device and validate configuration settings without the use of an external controller.

2. The safety laser scanner device of claim 1, wherein the external controller is a PLC device.

3. The safety laser scanner device of claim 1 or 2, wherein configuration settings include at least one of muting activation, zone set activation, winking, restarting a safety zone, or overriding an activation of a safety zone for the safety laser scanner.

4. The safety laser scanner device of one of claims 1 to 3, wherein the embedded software application communicates with a graphical user interface executed by an external PC coupled with the safety laser scanner, in particular wherein the graphical user interface includes a configuration area provided therein that includes:
a process image input area that is editable by the user to provide an input process image to the safety laser scanner; and/or
a process image output area configured to display an output process image received from the safety laser scanner.

5. The safety laser scanner device of claim 4, wherein the graphical user interface includes a test input configured to switch the safety laser scanner between operating in the operational mode and the test mode.

6. The safety laser scanner device of claim 4 or 5, wherein the process image input area presents a bitmap of the input process image with individual input bytes that are editable by the user.

7. The safety laser scanner device of one of claims 1 to 6, wherein the one or more embedded software applications includes:
a safety module configured to compute acquired measurements to detect intrusions to a configured safety area for the safety laser scanner and generate an output process image in response thereto;
a safety fieldbus interface module configured to communicate input and output process images with the external controller during operational mode; and
a simulator fieldbus interface module configured to communicate input and output process images with the graphical user interface during a test mode.

8. The safety laser scanner device of one of claims 1 to 7, wherein the simulator fieldbus interface module is disabled until an explicit GUI command is sent to activate the test mode.

9. The safety laser scanner device of claim 7 or 8, wherein the safety module communicates with the safety fieldbus interface module only during operational mode, and with the simulator fieldbus interface only during test mode.

10. A method for operating a safety laser scanner, comprising:
communicating input process images and output process images between a programmable logic controller (PLC) and the safety laser scanner during an operational mode;
communicating input process images and output process images between the safety laser scanner and an external computer running a graphical user interface (GUI) during a test mode; and
operating embedded logic within the safety laser scanner operable to emulate behavior of the PLC during test mode without a connection to the PLC.

11. The method of claim 10, wherein emulated behaviors of the PLC include one or more of a wink, zone set activation, restarting a safety zone, muting activation for the safety zone, or overriding activation of the safety zone.

12. The method of claim 10 or 11, further comprising:
transmitting a test mode activation request from the GUI to the safety laser scanner; and/or
transmitting input process images from the GUI to the safety laser scanner during the test mode and transmitting output process images from the safety laser scanner to the GUI during the test mode.

13. The method of one of claims 10 to 12, further comprising editing the input process images in response to a user input to the GUI during test mode, especially wherein editing the input process images includes editing an individual bit in a graphical representation of the input process image displayed by the GUI.

14. The method of one of claims 10 to 13, wherein input process images and output process images are graphically represented by the GUI as a bitmap.

15. The method of one of claims 10 to 14, wherein operating embedded logic within the safety laser scanner includes operating a simulator fieldbus interface module that is disabled until an explicit GUI command is sent to activate the test mode.
